(19) Europäisches Patentamt
European Patent Office
Office européen des brevets

(11) **EP 2 873 841 B1**

(12) **EUROPEAN PATENT SPECIFICATION**

(45) Date of publication and mention
of the grant of the patent:
**25.02.2026 Bulletin 2026/09**

(21) Application number: **14189036.8**

(22) Date of filing: **15.10.2014**

(51) International Patent Classification (IPC):
**F02D 35/02** (2006.01)    **G01L 23/22** (2006.01)
**F02D 41/28** (2006.01)    **F02D 41/14** (2006.01)

(52) Cooperative Patent Classification (CPC):
**F02D 35/027; F02D 41/28; G01L 23/226;**
F02D 2041/1432; F02D 2041/288; F02D 2200/1015

(54) **POWER UNIT, VEHICLE AND METHOD FOR CONTROLLING POWER UNIT**

ANTRIEBSEINHEIT UND VERFAHREN ZUR STEUERUNG EINER ANTRIEBSEINHEIT

UNITÉ D'ALIMENTATION ET PROCÉDÉ DE COMMANDE DE L'UNITÉ D'ALIMENTATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.10.2013 JP 2013222124**

(43) Date of publication of application:
**20.05.2015 Bulletin 2015/21**

(73) Proprietor: **Yamaha Hatsudoki Kabushiki Kaisha
Iwata-shi, Shizuoka 438-8501 (JP)**

(72) Inventors:
• **Araki, Yuuji**
  **Iwata-shi, Shizuoka 438-8501 (JP)**
• **Ishigami, Hidetoshi**
  **Iwata-shi, Shizuoka 438-8501 (JP)**
• **Ito, Daiki**
  **Iwata-shi, Shizuoka 438-8501 (JP)**
• **Iwamoto, Kazuteru**
  **Iwata-shi, Shizuoka 438-8501 (JP)**
• **Takahashi, Koji**
  **Iwata-shi, Shizuoka 438-8501 (JP)**
• **Takahashi, Seigo**
  **Iwata-shi, Shizuoka 438-8501 (JP)**

(74) Representative: **Grünecker Patent- und
Rechtsanwälte
PartG mbB
Leopoldstraße 4
80802 München (DE)**

(56) References cited:
**EP-A2- 0 361 057    DE-A1- 102004 036 502
US-B1- 7 254 475**

## Description

The present invention relates to a power unit and a vehicle.

In recent years, many developments for increasing the compression ratio of an engine have been conducted to improve the fuel efficiency. Knocking easily occurs inevitably if the compression ratio increases. Therefore, when the compression ratio increases, knocking countermeasure control that controls the engine to prevent frequent occurrence of knocking while monitoring occurrence of knocking is indispensable.

In the process of monitoring the occurrence of knocking, a knock sensor is used to detect vibration of an engine, a filter circuit is used to extract, from the detection signal of the knock sensor, a signal in a frequency band including a distribution of knocking vibration, and the occurrence of knocking is determined based on the extracted signal.

Conventionally, it has been known that various noises are mixed in the detection signal of the knock sensor.

For example, it has been known that a signal of mechanical vibration of the engine, such as a signal of valve seating noise of the engine and a signal of slap noise caused by slight inclination and vibration of the piston in the engine, is mixed in the detection signal of the knock sensor. The peak of the mechanical vibration is distributed between 4 kHz and 7 kHz. Therefore, if the frequency band in which the peaks of the knocking vibration are distributed is in the range, accurate determination of knocking is difficult due to the noise of the mechanical vibration. PTL 1 illustrates that the peaks of the knocking vibration are distributed in a plurality of frequency bands, such as 6 kHz to 8 kHz, 11 kHz to 13 kHz, and 15 kHz to 17 kHz (see FIG. 13B of PTL 1).

To cope with the problem, there has been proposed determine knocking using a signal of another frequency band that has a frequency higher than the mechanical vibration noise and that does not overlap with the frequency range of the mechanical vibration noise among the plurality of frequency bands including the distributions of the peaks of the knocking vibration. Specifically, it has been proposed to extract a signal in a frequency band with a frequency higher than the mechanical vibration noise, such as 11 kHz to 13 kHz and 15 kHz to 17 kHz, for determining knocking (for example, see lower left column of page 6 of PTL 1).

Conventionally, it has been pointed out that noise caused by operation of an ignition plug section is mixed in the vibration signal detected by the knock sensor (see paragraph 0004 of PTL 2). This is because a large current flows during the operation of the ignition plug section. Accurate determination of the occurrence of knocking is difficult if the ignition timing of the engine overlaps with the detection timing of the knocking vibration. PTL 2 illustrates that the peak of the knocking vibration is distributed in the frequency band of 7 kHz to 15 kHz, for example (see paragraphs 0060 to 0066 and FIG. 7 of PTL 2).

Conventionally, a technique of extracting a signal by switching a plurality of different filters with center frequencies of 7 kHz and 15 kHz in response to the number of revolutions of the engine has been proposed in order to cope with the problem. The signal extracted by the switched filter is used to determine knocking (see Claim 2 and Embodiment 3 of PTL 2). A power unit according to the preamble of claim 1 is disclosed in EP 0 361 057 A1.

Citation List

Patent Literature

PTL I: Japanese Patent Application Laid-Open No. HEI 01-159467
PTL2: Japanese Patent Application Laid-Open No. 2004-257332

In order to avoid the influence of various noises, the techniques proposed in PTL 1 and PTL 2 implement determination of knocking by using a signal in a frequency band including a distribution of a high-order peak of the knocking vibration. In general, the peak with the lowest frequency is the strongest in the knocking vibration, and the strength of the peak decreases with an increase in the order of the frequency band (see FIG. 13B and description of FIG. 13B of PTL 1 and FIG. 7 and explanation of FIG. 7 of PTL 2). Therefore, a signal in a high-order frequency band of the knocking vibration can be used to avoid various noises in the proposed techniques. However, the peak strength of the knocking vibration included in the signal is reduced. As a result, it is difficult to further improve the determination accuracy of the occurrence of knocking.

An object of the present invention is to provide a power unit and a vehicle that can determine knocking with high accuracy while avoiding the influence of various noises, thus improving the compression ratio of an engine. According to the present invention said object is solved by an engine having the features of independent claim 1. Preferred embodiments are laid down in the dependent claims.

A power unit according to an aspect of the present invention includes: an engine; and a control apparatus that controls combustion of the engine, in which: the engine is configured so that a bore diameter of the engine is equal to or greater than 45 mm but not greater than 60 mm; and the control apparatus includes a knock sensor that detects vibration of the engine, in which: the control apparatus extracts, from a detection signal of the knock sensor, components in a primary frequency band that is a lowest frequency band among a plurality of frequency bands in which peaks of knocking vibration are distributed according to the bore diameter equal to or greater than 45 mm but not greater than 60 mm, with a larger gain than that of components in a secondary frequency band that is a second lowest frequency band; the control apparatus determines that knocking occurs based on a detection signal of the components in the primary frequency band extracted with a larger gain than that of the components in the secondary frequency band; and the control apparatus controls the combustion of the engine based on a determination result of the occurrence of knocking. In one aspect of the invention, the control apparatus includes a band-pass filter circuit that has a pass-band peak located between the primary frequency band and the secondary frequency band and closer to the primary frequency band than to the secondary frequency band. In another aspect of the invention, the knock sensor is a resonant knock sensor that has a resonance frequency located between the primary frequency band and the secondary frequency band and closer to the primary frequency band than to the secondary frequency band.

A vehicle according to an aspect of the present invention includes the power unit.

Advantageous Effects of Invention

According to the present invention, setting the bore diameter equal to or greater than 45 mm but not greater than 60 mm allows the lowest primary frequency band among the plurality of frequency bands including the distributions of the peaks of the knocking vibration to appropriately separate from the range of 4 kHz to 7 kHz in which many peaks of the mechanical vibration noises are distributed. According to the present invention, setting the bore diameter equal to or greater than 45 mm but not greater than 60 mm allows the primary frequency band including the distribution of the peak of the knocking vibration to appropriately separate from the frequency band of 20 kHz or greater in which the accuracy of the knock sensor decreases. In the present invention, the signal in the lowest primary frequency band is extracted with a larger gain than that of the second lowest secondary frequency band among the plurality of frequency bands including the distributions of the peaks of the knocking vibration according to the bore diameter equal to or greater than 45 mm but not greater than 60 mm. The control apparatus of the present invention determines that knocking occurs based on the extracted signal. Therefore, according to the present invention, the occurrence of knocking can be accurately determined by the knocking signal in the primary frequency band with the largest signal strength, while avoiding the influence of various noises. The accurate determination of the occurrence of knocking can improve the compression ratio of the engine.

Brief Description of Drawings

FIG. 1 is a block diagram showing a vehicle of an embodiment of the present invention;
FIG. 2 is a block diagram showing an ECU included in the vehicle and a configuration around the ECU included in the vehicle of the embodiment of the present invention;
FIG. 3 is a frequency characteristic diagram showing vibrations generated in an engine of the vehicle of the embodiment;
FIG. 4 is a graph showing a relationship between a bore diameter and a resonance frequency of knocking;
FIG. 5 is a diagram describing an example of band-pass characteristics of a filter processing section when the bore diameter is at an upper limit;
FIGS. 6A, 6B, and 6C illustrate a relationship between a Q-value of the filter processing section and a gain difference between specific frequencies, FIGS. 6A, 6B, and 6C illustrating first, second and third examples, respectively;
FIG. 7 is a diagram describing an example of the band-pass characteristics of the filter processing section when the bore diameter is at a lower limit;
FIG. 8 is a diagram describing a gain difference between specific frequencies of the filter processing section;
FIGS. 9A and 9B are diagrams describing definition of the bore diameter and the compression ratio, FIG. 9A illustrating a state that a piston is at a bottom dead center, and FIG. 9B illustrating a state that the piston is at a top dead center;
FIG. 10 is a flowchart showing an example of a knock determination process executed by the ECU of the embodiment;
FIG. 11 is a diagram describing the knock determination process of FIG. 10;
FIG. 12 is a flowchart showing an example of a knocking countermeasure control process executed by the ECU of the embodiment;
FIG. 13 is a computation condition table describing a computation process of step S66 of FIG. 12; and
FIG. 14 is a timing chart describing the knocking countermeasure control process of FIG. 12.

Description of Embodiment

Hereinafter, a preferred embodiment of the present invention will be described in detail with reference to the accompanying drawings.

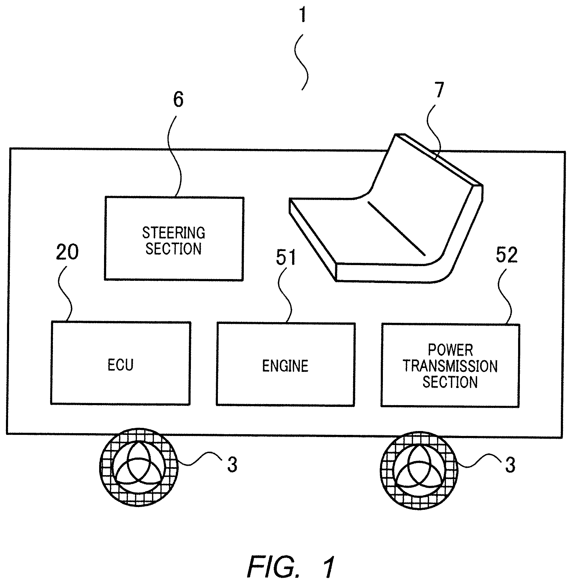

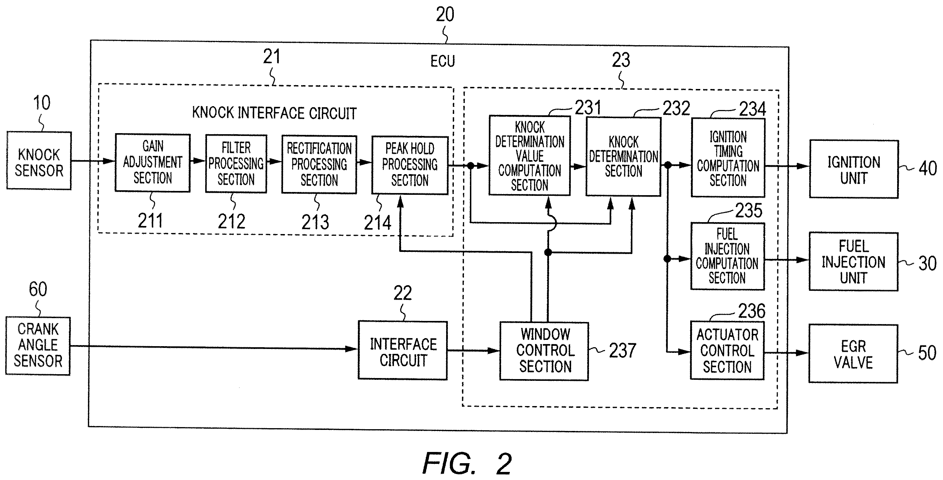

FIG. 1 is a block diagram showing a vehicle of the present embodiment. FIG. 2 is a block diagram showing an ECU included in the vehicle and a configuration around the ECU of the present embodiment.

As shown in FIG. 1, vehicle 1 of the present embodiment includes: engine 51 that is an internal combustion engine; wheels 3; power transmission section 52 that transmits power of engine 51 to a wheel; seat 7 for the driver to sit down; and steering section 6 that includes a steering wheel, an accelerator operation section, a brake operation section, and the like.

As shown in FIG. 2, vehicle 1 of the present embodiment further includes ECU (Engine Control Unit) 20, knock sensor 10, crank angle sensor 60, ignition unit 40, fuel injection unit 30, and EGR (Exhaust Gas Recirculation) valve 50. Knock sensor 10 and ECU 20 are corresponding to a control apparatus that controls combustion of engine 51.

A power unit of the embodiment of the present invention is obtained by integrating configuration elements that generate power of vehicle 1 into a single unit, and includes engine 51, ECU 20, knock sensor 10, and the like among the configuration elements described above. The power unit may include another configuration element such as a power transmission section.

<Details of Engine>

Engine 51 is a single-cylinder engine including single cylinder or a multiple-cylinder engine including multiple cylinders. Although a single cylinder engine will be described below, the configuration of the cylinder is applied to each cylinder for an engine including multiple cylinders.

The bore diameter of the single cylinder of engine 51 is set to a value equal to or greater than 45 mm but not greater than 60 mm in the present embodiment. The bore diameter is a parameter for determining a resonance frequency band of knocking vibration.

Engine 51 is a four-stroke engine that sequentially repeats, for example, an intake stroke, compression stroke, combustion stroke, and exhaust stroke. Engine 51 includes a cylinder block provided with the cylinder, a cylinder head disposed at one end of the cylinder, a piston, a connecting rod, a crankshaft, and the like. The cylinder head includes an intake valve, an exhaust valve, and an ignition plug.

The piston is disposed in a reciprocatory movable manner in the cylinder and connected to the crankshaft via the connecting rod. The intake valve opens and closes in the intake stroke to take a mixture of air and fuel into the cylinder. The exhaust valve opens and closes in the exhaust stroke to discharge combustion gas. Mechanical vibration called seating vibration is generated when the intake valve closes and when the exhaust valve closes.

Once the air-fuel mixture is combusted in the cylinder as a result of ignition of the ignition plug, the piston reciprocates to rotationally drive the crankshaft. The reciprocation of the piston may generate mechanical vibration called a piston slap caused by a minute inclination of the piston in the cylinder and a minute translational movement of the piston in the radial direction of the cylinder.

The air-fuel mixture may be abnormally ignited near the cylinder wall in the course of expansion of the combustion of the air-fuel mixture in the cylinder. Vibration caused by the abnormal ignition is knocking.

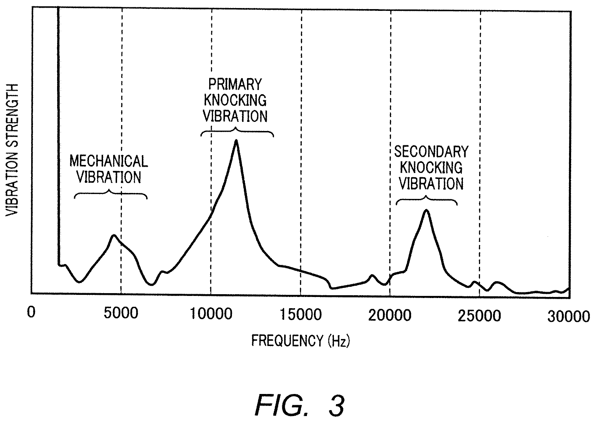

FIG. 3 is a frequency characteristic diagram showing vibrations generated in the engine of the vehicle of the embodiment.

As shown in FIG. 3, one peak group is distributed in a frequency band of 4 kHz to 7 kHz in the vibration generated in engine 51. The peak of vibration in the frequency band corresponds to the mechanical vibration including the seating vibration, the piston slap, and the like.

As shown in FIG. 3, peaks are distributed in a frequency band of 11 k to 13 kHz and a frequency band of 22 k to 23 kHz in the vibrations generated in engine 51 of the present embodiment. The vibration peaks of the frequency bands correspond to the knocking vibration.

Vibrations in a plurality of vibration modes overlap in the vibration of knocking. The vibration of one vibration mode has a natural vibration frequency (also called resonance frequency). Therefore, the peaks of the vibration of knocking are generated in a plurality of frequency bands corresponding to the natural vibration frequencies of the plurality of vibration modes. One frequency band including a distribution of a peak of knocking vibration may be restated as a frequency band including a distribution of a peak of vibration in one of the plurality of vibration modes of knocking.

Hereinafter, the frequency bands including distributions of the peaks of knocking vibration will be provided with orders, such as a primary knocking frequency band (corresponding to primary frequency band) for the lowest frequency band and a secondary knocking frequency band (corresponding to secondary frequency band) for the second lowest frequency band. The knocking vibration included in an n-th knocking frequency band will be provided with an order, such as an n-th knocking vibration.

In general, the knocking vibration has a property that the strength decreases with an increase in the order.

<Bore Diameter and Frequency of Knocking Vibration>

A relationship between the bore diameter of engine 51 and the frequency of the knocking vibration will be described.

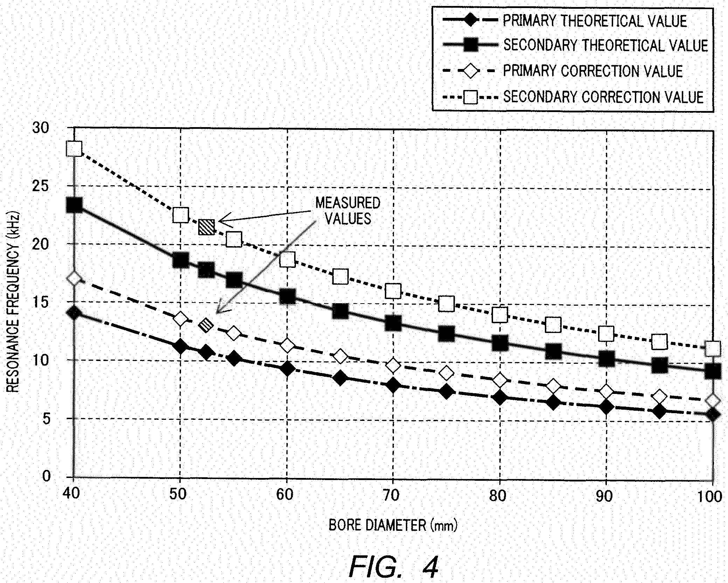

FIG. 4 is a graph showing a relationship between the bore diameter and the resonance frequencies of the primary and secondary knocking vibrations. FIG. 4 illustrates four plot lines indicating theoretical values of the resonance frequency of the primary knocking vibration ("primary theoretical values"), theoretical values of the resonance frequency of the secondary knocking vibration ("secondary theoretical values"), resonance frequencies of the primary knocking vibration corrected by a measured value ("primary correction values"), and resonance frequencies of the secondary knocking vibration corrected by a measured value ("secondary correction values").

As illustrated by the plot lines of the primary correction values and the secondary correction values of FIG. 4, the resonance frequencies of the primary and secondary knocking vibrations increase with a decrease in the bore diameter.

When the bore diameter is 60 mm, it can be estimated that the resonance frequency of the primary knocking vibration is 11 kHz, and the resonance frequency of the secondary knocking vibration is 18 kHz.

When the bore diameter is 45 mm, it can be estimated that the resonance frequency of the primary knocking vibration is 15 kHz, and the resonance frequency of the secondary knocking vibration is 25 kHz.

The primary correction value and the secondary correction value in FIG. 4 are obtained by acquiring a measured value of a certain bore diameter, calculating a relative error between the theoretical value of the resonance frequency and the measured value of the bore diameter, and applying the relative error to the theoretical values of all bore diameters. The theoretical value of the resonance frequency is obtained according to the following equations 1 to 3.

Equation 1 is a well-known Draper's equation for calculating the resonance frequency of knocking.

[1]

$$f = \frac{v}{\pi B} \rho_{mn} \qquad ... (Equation\ 1)$$

Here, f denotes resonance frequency, v denotes sound velocity of cylinder gas, B denotes bore diameter, $\rho_{mn}$ denotes vibration mode coefficients ($\rho_{10} \cong 1.841$, $\rho_{20} \cong 3.054$), m denotes order of vibration in radial direction, and n denotes order of vibration in circumferential direction.

Equation 2 is an equation for obtaining the sound velocity v of the cylinder gas.

[2]

$$v = \sqrt{\frac{\kappa RT}{M}} \qquad ... (Equation\ 2)$$

Here, $\kappa$ denotes ratio of specific heat (1.403), R denotes gas constant (8.314472 [J/(mol·K)]), M denotes molecular weight of air (0.0028966 [kg/mol]), and T denotes cylinder gas temperature [K].

Equation 3 is an equation for estimating the cylinder gas temperature from the intake pressure and the cylinder pressure.

[3]

$$T \simeq T_i = \frac{P_i \cdot V_i}{\eta_v \cdot m_{th} \cdot R} \qquad ... (Equation\ 3)$$

Here, $T_i$ denotes cylinder gas average temperature, $P_i$ denotes cylinder pressure, $V_i$ denotes cylinder volume, $\eta_v$ denotes volume efficiency, $m_{th}$ denotes theoretical air mass, and R denotes air gas constant.

As shown in FIG. 4, it can be considered that the resonance frequency of the knocking vibration is substantially determined by the bore diameter.

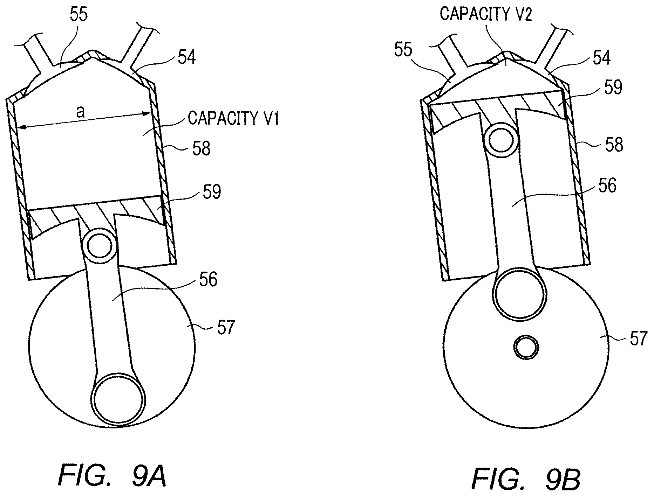

FIGS. 9A and 9B are diagrams describing definition of the bore diameter and the compression ratio. FIG. 9A illustrates a state that the piston is at the bottom dead center, and FIG. 9B illustrates a state that the piston is at the top dead center. FIGS. 9A and 9B illustrate cross sections of cylinder 58 and piston 59 of the engine cut along the central axis (cylindrical central axis of cylinder 58). In FIGS. 9A and 9B, reference numeral 58 denotes cylinder, 59 denotes piston, 54 denotes intake valve, 55 denotes exhaust valve, 56 denotes connecting rod, and 57 denotes crankshaft.

The bore diameter denotes inside diameter "a" of cylinder 58 as shown in FIGS. 9A and 9B. The compression ratio denotes a ratio of capacity V1 when the volume is the largest with piston 59 at the bottom dead center and capacity V2 when the volume is the smallest with piston 59 at the top dead center in a combustion chamber of cylinder 58 partitioned by piston 59.

<ECU and Configuration around ECU>

A configuration of ECU 20 will be described next.

ECU 20 performs control related to the combustion of engine 51. ECU 20 executes a knock determination process of determining whether or not knocking occurs in engine 51 and a knocking countermeasure control process of efficiently combusting engine 51 within a range of not causing frequent occurrence of knocking.

Ignition unit 40 includes an ignition plug disposed on the cylinder head and ignites the ignition plug based on a control signal of ECU 20.

Fuel injection unit 30 includes a throttle valve that controls the intake air volume and a fuel injection apparatus that injects and supplies fuel to an intake passage. Fuel injection unit 30 injects fuel to the intake passage at timing and amount based on a control signal of ECU 20. An air-fuel mixture containing air and fuel supplied to the intake passage is supplied into the cylinder of engine 51 when the intake valve is opened.

EGR valve 50 is a valve that recirculates, to the intake passage, part of the combustion gas discharged from the cylinder of engine 51 to an exhaust passage, and changes the degree of opening based on a control signal of ECU 20. EGR valve 50 and the control of EGR valve 50 may be omitted.

Crank angle sensor 60 is a sensor that detects the rotation angle of the crankshaft of engine 51, and outputs a crank angle signal to ECU 20. ECU 20 can count the rotation angle of the crankshaft and the engine speed based on the crank angle signal.

Knock sensor 10 is a vibration detection sensor that detects vibration generated in engine 51 to determine that knocking occurs. Knock sensor 10 includes, for example, a piezoelectric element that receives vibration acceleration generated in engine 51, and knock sensor 10 outputs, from the piezoelectric element, a detection signal indicating AC voltage according to the vibration acceleration.

Knock sensor 10 is, for example, a non-resonant sensor in which the gain is flat in a frequency range to be detected. Knock sensor 10 is fixed to engine 51 or to a component that receives vibration of engine 51, and the basic characteristics of knock sensor 10 include high impact resistance, heat resistance, and corrosion resistance. High detection accuracy is set in a predetermined frequency range in knock sensor 10. Expansion of the frequency range with a flat gain to a higher frequency such as 25 kHz in the knock sensor has been proposed. The proposed knock sensor can be realized by special plate processing that increases the manufacturing cost (for example, see paragraph 0032 of Japanese Patent Application Laid-Open No. 2012-220336). In the present embodiment, knock sensor 10 with a low manufacturing cost is adopted, in which the frequency range that can obtain a flat gain with little variations is 20 kHz or less.

Knock sensor 10 is attached to, for example, the cylinder block of engine 51. The detection signal of knock sensor 10 is input to ECU 20.

As shown in FIG. 2, ECU 20 includes: knock interface circuit 21 that receives a signal of knock sensor 10; interface circuit 22 that receives a signal of crank angle sensor 60; and microcomputer 23.

Knock interface circuit 21 is a circuit that extracts a signal value for determining that knocking occurs from a detection signal of knock sensor 10 and that transmits the signal value to microcomputer 23. Knock interface circuit 21 includes gain adjustment section 211, filter processing section 212 (also called signal extraction section), rectification processing section 213, and peak hold processing section 214.

Gain adjustment section 211 adjusts the gain of the detection signal of knock sensor 10. The adjustment of the gain is, for example, adjustment of the level of the detection signal that changes according to the engine speed or adjustment of the level of the detection signal that changes based on the individual difference of knock sensor 10.

Filter processing section 212 includes, for example, an analog band-pass filter circuit. Filter processing section 212 has band-pass characteristics for passing the components in the primary knocking frequency band from the detection signal of knock sensor 10 with a larger gain than the components in the frequency band of the mechanical vibration (4 kHz to 7 kHz) and also than the components in the frequency band in which the detection accuracy of knock sensor 10 decreases (20 kHz or greater). The signal passed through filter processing section 212 is a signal in which the components in a specific frequency band are extracted with a large gain. The gain includes scaling factors of 1 or more and less than 1.

The band-pass filter circuit of filter processing section 212 is an active filter including only one operational amplifier. According to the configuration, the components in a specific frequency band of a signal can be extracted with a large gain, and the cost can be reduced.

Rectification processing section 213 rectifies a detection signal of an AC waveform.

Peak hold processing section 214 holds and outputs the peak voltage of the detection signal in a signal extraction period designated by a timing signal of window control section 237.

The specific configuration of knock interface circuit 21 is not limited to the example of FIG. 2, and any configuration is possible as long as the components of the primary knocking vibration can be extracted from the detection signal of knock sensor 10 with a larger gain than the other components. For example, gain adjustment section 211, rectification processing section 213, and peak hold processing section 214 may be omitted, and knock interface circuit 21 may be formed by filter processing section 212.

Alternatively, gain adjustment section 211 may be disposed on a latter part of filter processing section 212 or a latter part of rectification processing section 213 in knock interface circuit 21.

Alternatively, knock interface circuit 21 may include only filter processing section 212 and peak hold processing section 214. Peak hold processing section 214 may be changed to a bottom hold circuit that holds and outputs the bottom voltage of the detection signal in the designated signal extraction period. Peak hold processing section 214 may be changed to an integration circuit that integrates absolute values and the like of the detection signal in the designated signal extraction period to output a signal of the integration result.

Interface circuit 22 adjusts the waveform of the output signal of crank angle sensor 60 and outputs the waveform to microcomputer 23.

Microcomputer 23 includes knock determination value computation section 231, knock determination section 232, ignition timing computation section 234, fuel injection computation section 235, actuator control section 236, and window control section 237. Ignition timing computation section 234, fuel injection computation section 235, and actuator control section 236 form a combustion control section that controls the combustion of engine 51. The combustion control section may include one of or a combination of a plurality of ignition timing computation section 234, fuel injection computation section 235, and actuator control section 236.

The elements of microcomputer 23 may be formed by software executed by a CPU (central processing unit) or may be formed by hardware such as a DSP (digital signal processing circuit).

Window control section 237 receives a crank angle signal from crank angle sensor 60 and controls processing timing of each section. Specifically, window control section 237 outputs a timing signal indicating a signal extraction period to peak hold processing section 214. Window control section 237 further outputs a timing signal to knock determination value computation section 231 and knock determination section 232 for acquiring a signal.

Knocking may occur immediately before the piston reaches the top dead center until the completion of the combustion of the combustion chamber. Therefore, window control section 237 outputs a timing signal to peak hold processing section 214 for executing peak hold operation in this period. While the output of peak hold processing section 214 is held after the termination of the period, window control section 237 further outputs a timing signal to knock determination value computation section 231 and knock determination section 232 for acquiring a signal.

Knock determination value computation section 231 and knock determination section 232 execute a knock determination process described later to determine that knocking occurs. Knock determination section 232 notifies ignition timing computation section 234, fuel injection computation section 235, and actuator control section 236 of the determination result.

Ignition timing computation section 234 executes a knocking countermeasure control process described later to control ignition unit 40.

Fuel injection computation section 235 controls fuel injection unit 30. Fuel injection computation section 235 may execute a knocking countermeasure control process of adjusting the fuel injection quantity in response to the occurrence of knocking when it is determined that knocking occurs.

Actuator control section 236 controls EGR valve 50. Actuator control section 236 may execute a knocking countermeasure control process of adjusting the degree of opening of the ERG valve in response to the occurrence of knocking when it is determined that knocking occurs.

<Relationship between Band-pass Characteristics of Filter Processing Section and Bore Diameter of Engine>

It is sufficient that filter processing section 212 can extract and sufficiently isolate the signal components in the primary knocking frequency band from the signal components of the mechanical vibration and from the signal components in the frequency band in which the accuracy of knock sensor 10 decreases.

Next, a description will be given of the fact that the upper limit of the bore diameter of engine 51 that can sufficiently satisfy this condition is 60 mm, while the lower limit is 45 mm.

<When Bore Diameter Is at Upper Limit>

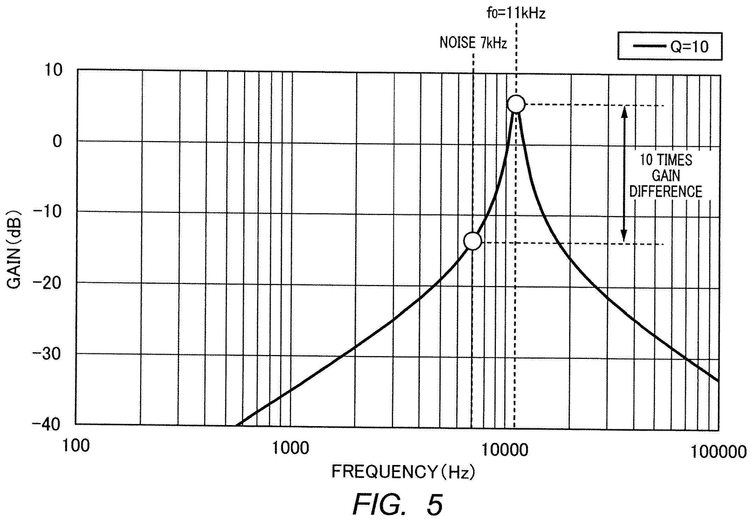

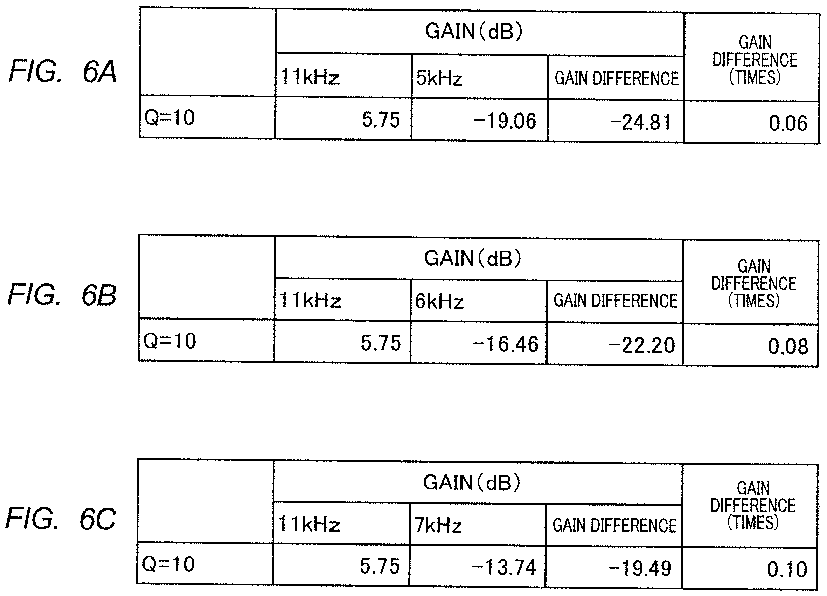

FIG. 5 is a diagram describing an example of the band-pass characteristics of the filter processing section when the bore diameter is at the upper limit. FIGS. 6A, 6B, and 6C illustrate a relationship between a Q-value of the filter processing section and a gain difference between specific frequencies. FIGS. 6A, 6B, and 6C illustrate first, second, and third examples, respectively.

When the bore diameter is 60 mm, it is estimated that the resonance frequency of the primary knocking vibration is 11 kHz based on the plot line of the primary theoretical value of FIG. 4.

The frequency band of the mechanical vibration of engine 51 is 4 kHz to 7 kHz.

The frequency band that reduces the accuracy of knock sensor 10 is 20 kHz or greater.

If the Q-value is increased, filter processing section 212 can extract specific frequency components with a large gain and sufficiently attenuate the other frequency components. On the other hand, the responsiveness of filter processing section 212 decreases if the Q-value is increased. Large ignition noise is generated at the ignition timing in one cycle of engine 51. Therefore, if the responsiveness of filter processing section 212 is too low, the ignition noise permeated into filter processing section 212 affects the output of filter processing section 212 for a long time. As a result, the S/N ratio of the detection signal of knock sensor 10 decreases. This problem emerges when the number of revolutions of the engine is high. Since the knocking vibration is temporary vibration, the signal of the knocking vibration passing through filter processing section 212 disappears before the peak voltage becomes high if the responsiveness of filter processing section 212 is low. Therefore, if the responsiveness of filter processing section 212 is low, the signal of the knocking vibration is acquired as a signal with a low peak voltage. The maximum value of the Q-value with a little reduction in the peak voltage caused by the responsiveness and with detection accuracy of knocking is 10.

In the configuration examined here, frequency $f_0$ of the pass-band peak of filter processing section 212 is set to resonance frequency 11 kHz of the primary knocking vibration, and the Q-value is set to the maximum tolerance 10 as indicated by the band-pass characteristic line of FIG. 5 (Q-value = 10).

In this case, the attenuation factor from the pass-band peak of filter processing section 212 can be 1/10 at 7 kHz where the mechanical vibration is distributed (see FIG. 6C).

According to the setting, the attenuation factors can also be 1/10 or less at 6 kHz and 5 kHz where the mechanical vibration is distributed (see FIGS. 6A and 6B).

Although the signal strength of the mechanical vibration is relatively large, it can be considered that the determination of the occurrence of knocking is not significantly affected if the attenuation factor can be 1/10.

In the case of the band-pass characteristic line of FIG. 5 (Q-value = 10), an attenuation factor that is not particularly problematic is obtained in the range of 20 kHz or greater in which the accuracy of knock sensor 10 decreases. The frequency band in which the accuracy of knock sensor 10 decreases includes a little noise, such as mechanical vibration, not correlated with knocking. Therefore, it can be considered that the noise, such as mechanical vibration, does not significantly affect the determination of the occurrence of knocking if the attenuation factor is 1/5.

For these reasons, the upper limit of the bore diameter of engine 51 is set to 60 mm in the present embodiment.

The threshold of the knocking strength to be determined can be set a little higher, or well-known statistical processing upgraded for the knock determination process can be applied to slightly increase the tolerable attenuation factor of the mechanical vibration. Under this condition, the occurrence of knocking can be accurately determined even if the bore diameter of engine 51 is 50 to 55 mm, the primary knocking frequency band is set to 12.5 k to 13.5 kHz, and the Q-value of filter processing section 212 is reduced.

Frequency $f_0$ of the pass-band peak of filter processing section 212 is set to a frequency closer to the natural frequency of the primary knocking vibration than to the natural frequency of the secondary knocking vibration.

<When Bore Diameter Is at Lower Limit>

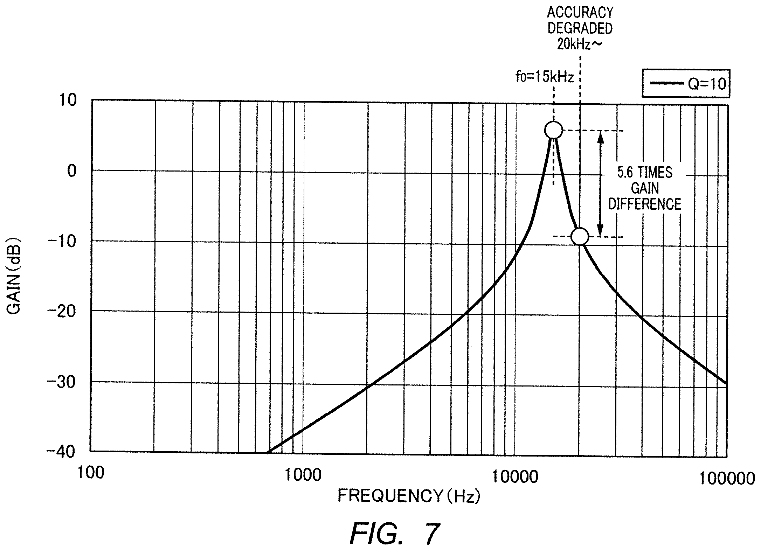

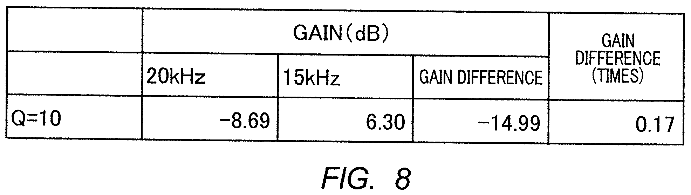

FIG. 7 is a diagram describing an example of the band-pass characteristics of the filter processing section when the bore diameter is at the lower limit. FIG. 8 illustrates a gain difference between specific frequencies of the filter processing section.

When the bore diameter is 45 mm, it is estimated that the resonance frequency of the primary knocking vibration is 15 kHz based on the plot line of the primary theoretical value of FIG. 4.

In the configuration examined here, frequency $f_0$ of the pass-band peak of filter processing section 212 is set to resonance frequency 15 kHz of the primary knocking vibration, and the Q-value is set to the maximum tolerance 10 as indicated by the band-pass characteristic line of FIG. 7.

In this case, the attenuation factor from the pass-band peak of filter processing section 212 can be 1/5 or less at 20 kHz or greater in which the accuracy of knock sensor 10 decreases (see FIG. 8).

The signal strength of the frequency band in which the accuracy of knock sensor 10 decreases does not increase much, and it can be considered that the determination of the occurrence of knocking is not significantly affected if the attenuation factor can be 1/5.

According to the setting, an attenuation factor that is not particularly problematic can be obtained in a range of 4 kHz to 7 kHz in which the mechanical vibration is distributed.

For these reasons, the lower limit of the bore diameter of engine 51 is set to 45 mm in the present Embodiment.

In the present embodiment, the bore diameter of engine 51 is set to a value equal to or greater than 45 mm but not greater than 60 mm, and filler processing section 212 extracts the signal of the primary knocking vibration with a larger gain than that of the secondary knocking vibration. According to the configuration, the knocking vibration signal and the mechanical vibration noise are sufficiently isolated, and the knocking vibration signal and the signal components of the frequency range in which the accuracy of knock sensor 10 decreases are sufficiently isolated. This makes it possible to accurately determine that knocking occurs.

<Knock Determination Process>

An example of the knock determination process executed by ECU 20 of the present embodiment will be described.

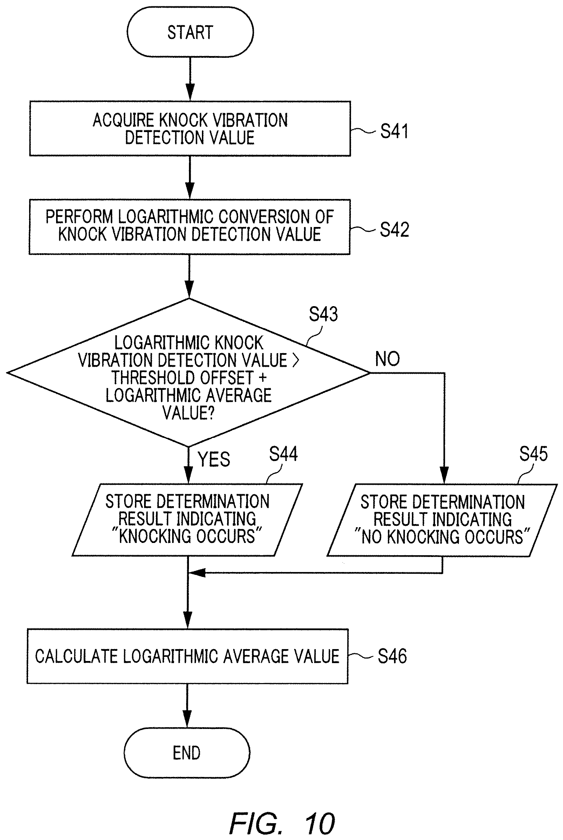

FIG. 10 is a flowchart showing the knock determination process.

The knock determination process of FIG. 10 is started at a predetermined timing in one cycle of engine 51 and is repeatedly executed in each cycle of engine 51.

When the knock determination process is started, knock determination value computation section 231 and knock determination section 232 acquire the output of knock interface circuit 21 as a knock vibration detection value based on the timing signal of window control section 237 in step S41. Specifically, microcomputer 23 applies A/D (analog/digital) conversion to the output of knock interface circuit 21, and the converted digital value is acquired.

In step S42, knock determination value computation section 231 and knock determination section 232 perform logarithmic conversion of the acquired knock vibration detection value to calculate a logarithmic knock vibration detection value.

In step S43, knock determination section 232 compares the logarithmic knock vibration detection value with a knock determination threshold (= threshold offset + logarithmic average value) to determine whether the logarithmic knock vibration detection value is larger. The process of step S43 is an example of the process of determining that knocking occurs. The logarithmic average value is a value calculated by knock determination value computation section 231 in step S46. The threshold offset is a certain value defined in advance by experiment or the like.

As a result of the comparison, if the logarithmic knock vibration detection value is larger, knock determination section 232 holds the determination result indicating the occurrence of knocking in a memory or the like (step S44). The determination result held by knock determination section 232 is output to ignition timing computation section 234, fuel injection computation section 235, and actuator control section 236.

On the other hand, if the logarithmic knock vibration detection value is smaller, knock determination section 232 holds the determination result indicating no occurrence of knocking in the memory or the like (step S45). The determination result held by knock determination section 232 is output to ignition timing computation section 234, fuel injection computation section 235, and actuator control section 236.

The processes of steps S44 and S45 can be omitted by switching the determination process of step S43 to the control process in response to the occurrence of knocking.

In step S46, knock determination value computation section 231 calculates an average value of a plurality of knock vibration detection values acquired in a plurality of past engine cycles and performs logarithmic conversion of the average value to calculate a logarithmic average value. One knock determination process is thus finished.

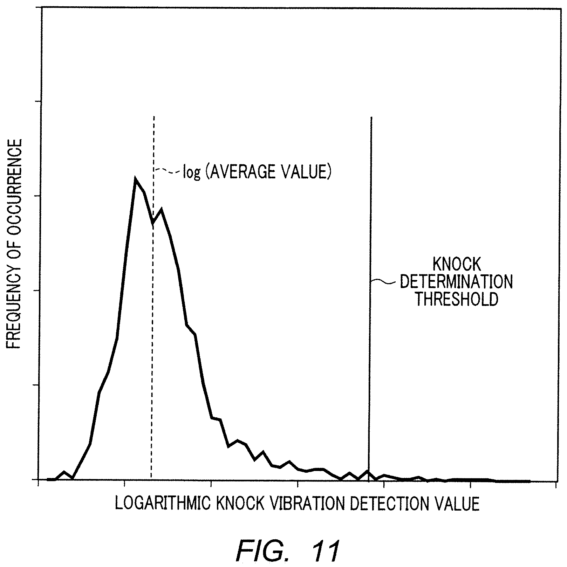

FIG. 11 is a diagram describing the knock determination process. The horizontal axis of FIG. 11 indicates the logarithmic knock vibration detection value, and the vertical axis indicates the frequency in the plurality of past engine cycles.

As described, the knock vibration detection value is a signal value extracted from the detection signal of knock sensor 10 in the period during which knocking may possibly occur. Therefore, when the logarithmic knock vibration detection values are acquired and calculated over a plurality of engine cycles, the logarithmic knock vibration detection values are distributed in a low range as shown in a histogram of FIG. 11. When knocking occurs less frequently, the logarithmic knock vibration detection value is a value higher than the distribution.

Although the tendency of the distribution of the logarithmic knock vibration detection values does not change much, the absolute value of the range including the distribution of the logarithmic knock vibration detection values is changed by external factors such as engine speed and individual variations of knock sensor 10.

Therefore, in the knock determination process of FIG. 10, the logarithmic average value is calculated from the population of the knock vibration detection values acquired over a plurality of engine cycles (step S46), and the threshold offset is added to the logarithmic average value to determine the knock determination threshold (step S43). In the knock determination process of FIG. 10, the sizes of the knock determination threshold and the logarithmic knock vibration detection value are compared (step S43), and a knock vibration detection value larger than the value in the normal distribution due to knocking is discriminated to determine that knocking occurs.

The knock determination process described above is just an example. Various other methods may be applied to the knock determination process to determine that knocking occurs from the signal value acquired through knock interface circuit 21.

<Knocking Countermeasure Control Process>

Next, an example of the knocking countermeasure control process executed by ECU 20 of the present embodiment will be described.

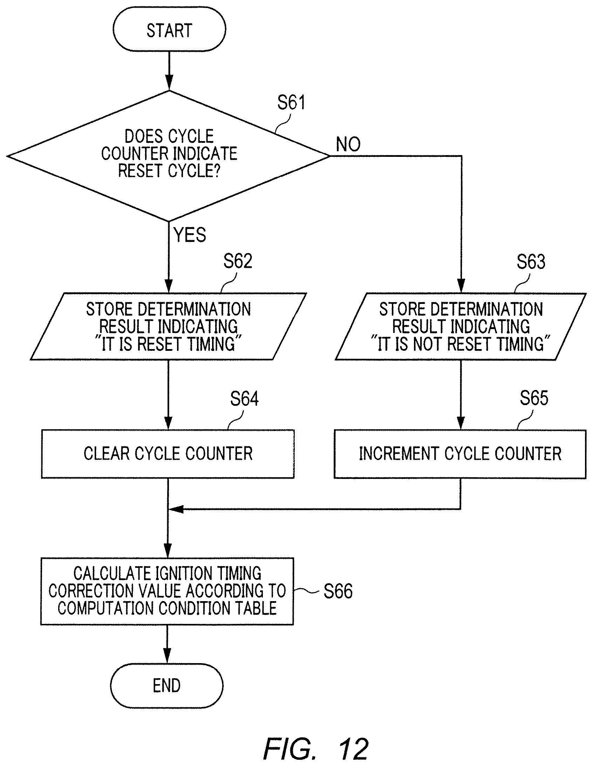

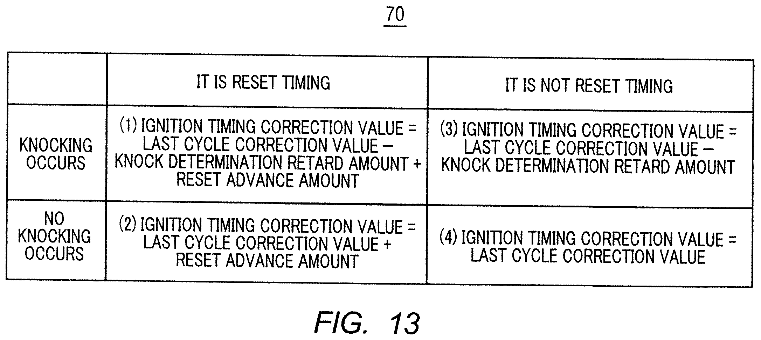

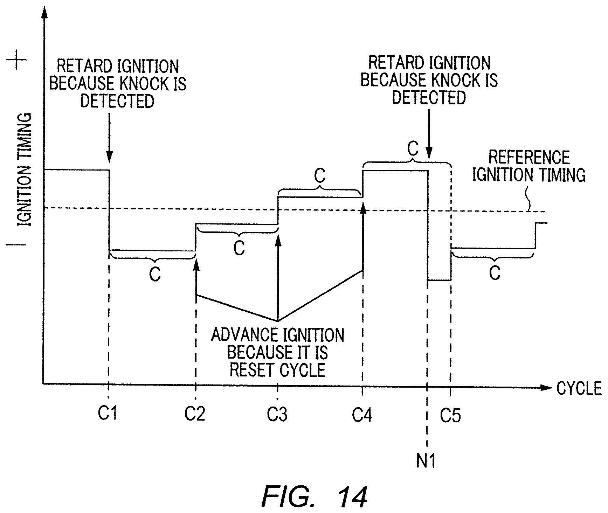

FIG. 12 is a flowchart showing the knocking countermeasure control process. FIG. 13 is a computation condition table describing a calculation process of step S66 of FIG. 12. FIG. 14 is a timing chart describing an example of the knocking countermeasure control process.

The knocking countermeasure control process is started at a predetermined timing in one cycle of engine 51 and is repeatedly executed in each cycle of engine 51.

As shown in FIG. 14, the knocking countermeasure control process is a process of correcting the ignition timing from reference ignition timing based on the determination of the occurrence of knocking.

Specifically, as shown in FIG. 14, the ignition timing is retarded from the reference ignition timing by a certain amount (hereinafter, called "knock determination retard amount") if it is determined that knocking occurs. If a period during which no knocking is determined to occur for a predetermined period C (hereinafter, called "reset cycle"), the ignition timing is advanced by an advance amount (hereinafter, called "reset advance amount") smaller than the knock determination retard amount.

The reference ignition timing is a standard ignition timing determined based on the number of revolutions of engine 51 and the like.

When the knocking countermeasure control process of FIG. 12 is started, ignition timing computation section 234 first determines whether a cycle counter that counts the engine cycle indicates the reset cycle (termination cycle of period C of FIG. 14) in step S61.

If the result of the determination is affirmative, ignition timing computation section 234 holds the determination result indicating that it is the reset timing in the memory or the like in step S62.

Ignition timing computation section 234 clears the cycle counter in step S64.

On the other hand, if the determination result of step S61 is negative, ignition timing computation section 234 holds the determination result indicating that it is not the reset timing in the memory or the like in step S63.

The processes of steps S62 and S63 can be omitted by immediately switching the determination process of step S61 to the control process according to the determination result.

Ignition timing computation section 234 increments the cycle counter in step S65.

In step S66, ignition timing computation section 234 calculates an ignition timing correction value according to computation condition table 70 (see FIG. 13). The computation condition is determined from the knocking determination result held in the memory or the like in the knock determination process of FIG. 10 and from the determination result indicating whether it is the reset timing held in the memory or the like in step S62 or S63 of FIG. 12.

More specifically, if it is determined that it is the reset timing and that knocking occurs, ignition timing computation section 234 calculates the ignition timing correction value by "last cycle correction value - knock determination retard amount + reset advance amount" as shown in field (1) of FIG. 13. As a result of the calculation, the ignition timing is retarded by "knock determination retard amount - reset advance amount" (see cycle C1 of FIG. 14) in the cycle in which it is determined that knocking occurs, and frequent occurrence of knocking is prevented.

As shown in field (2) of FIG. 13, if it is determined that it is the reset timing and that no knocking occurs, ignition timing computation section 234 calculates the ignition timing correction value by "last cycle correction value + reset advance amount." As a result of the calculation, the ignition timing gradually advances in the cycles in which no knocking occurs for a while (cycles C2, C3, C4, and C5 of FIG. 14), and engine 51 is combusted more efficiently.

As shown in field (3) of FIG. 13, if it is determined that it is not the reset timing and that knocking occurs, ignition timing computation section 234 calculates the ignition timing correction value by "last cycle correction value - knock determination retard amount." As a result of the calculation, the ignition timing is retarded by "knock determination retard amount" (see cycle N1 of FIG. 14) without a delay if it is determined that knocking occurs, and frequent occurrence of knocking is prevented.

As shown in field (4) of FIG. 13, if it is determined that it is not the reset timing and that no knocking occurs, ignition timing computation section 234 sets the ignition timing correction value to the same value as the correction value of the last cycle and does not change the ignition timing correction value.

Once the ignition timing correction value is calculated, ignition timing computation section 234 outputs a timing signal to ignition unit 40 at a timing reflecting the correction value to ignite the ignition plug.

A maximum value and a minimum value of the ignition timing correction amount may be set in the calculation process of the ignition timing correction value of FIG. 12 (step S66) to prevent the ignition timing from exceeding the appropriate range. The maximum value may be set if the ignition timing correction amount exceeds the maximum value, and the minimum value may be set if the ignition timing correction amount is below the minimum value.

According to the knock determination process (FIG. 10) and the knocking countermeasure control process (FIG. 12), the ignition timing is retarded without a delay if it is determined that knocking occurs as shown in FIG. 14, and frequent occurrence of knocking is prevented afterward. The ignition timing is gradually advanced if it is determined that no knocking occurs. According to the control, the ignition timing is controlled near the knocking limit, and the fuel efficiency and the output characteristics of engine 51 are fully improved.

The knocking countermeasure control process described above is just an example, and various other well-known methods may be applied. Although the method of adjusting the ignition timing for efficient combustion without frequent occurrence of knocking is adopted as the knocking countermeasure control process, other methods of adjusting the fuel injection quantity, adjusting the degree of opening of the EGR valve, and a combination of these adjustments may be adopted.

As described, according to vehicle 1 and the power unit of the present embodiment, the frequency band including the distribution of the peak of the primary knocking vibration can be appropriately separated from the range of 4 kHz to 7 kHz in which a large amount of the peak of the mechanical vibration is distributed. According to the present embodiment, the frequency band including the distribution of the peak of the primary knocking vibration can be appropriately separated from the frequency band of 20 kHz or greater in which the accuracy of knock sensor 10 decreases.

According to the present embodiment, the responsiveness of filter processing section 212 is not significantly reduced even if both of the reduction in the responsiveness caused by the level of the band-pass frequency band and the reduction in the responsiveness caused by the Q-value are taken into account. This can also avoid the problem of overlapping of the signal acquiring period of microcomputer 23 with the ignition timing at which large ground noise is generated.

As a result, according to the present embodiment, the signal of the primary knocking vibration with the largest signal strength can be used for accurate determination of the occurrence of knocking. The compression ratio of the engine can also be improved by the knocking countermeasure control based on the accurate determination of the occurrence of knocking.

A description of an embodiment of the present invention has been given thus far.

Although the mode of using only the signal of the frequency components of the primary knocking vibration extracted with a large gain to determine that knocking occurs is illustrated in the embodiment, the present invention is not limited to this embodiment. The present invention at least includes a power unit and a vehicle that use the signal of the frequency components of the primary knocking vibration extracted with a large gain to determine that knocking occurs. For example, as shown in PTL 2, the present invention also includes a configuration of using a signal of the secondary knocking vibration to determine that knocking occurs under a predetermined condition, in place of the signal of the frequency components of the primary knocking vibration extracted with a large gain. In this configuration, a knock sensor that can detect a wide frequency range may be adopted. The present invention also includes a configuration of using a signal of frequency components of the secondary or higher-order knocking vibration extracted with a large gain in addition to the signal of the frequency components of the primary knocking vibration extracted with a large gain to determine that knocking occurs. The present invention may be combined with other techniques that increase the determination accuracy as long as at least the signal of the frequency components of the primary knocking vibration extracted with a large gain is used to determine that knocking occurs, and the present invention also includes configurations of such combinations.

The setting value of the bore diameter described in the embodiment is not unambiguously determined by the exhaust volume of the engine and the like. For example, even if the capacity of the engine is determined, the bore stroke and the number of cylinders can be selected to set the bore diameter to the value of the present invention. More specifically, although the bore diameter of the engine is set equal to or greater than 45 mm but not greater than 60 mm in this embodiment, the amount of stroke of the piston and the number of cylinders can be adjusted to obtain an optional capacity of the engine. Usually, the bore diameter is one of the factors that significantly affect the performance of the engine, so that the value of the bore diameter is not just a simple design matter.

The configurations and the methods specifically described in the embodiment can be appropriately changed without departing from the gist of the invention. For example, the vehicle according to the present invention includes various types of vehicles such as an automobile, a motorcycle, and a snow tractor like a snow mobile. The number of wheels can be four, three, or two, for example, and the number of wheels is not particularly limited. The vehicle according to the present invention may be a box-shaped vehicle in which the the engine, so that the value of the bore diameter is not just a simple design matter.

The configurations and the methods specifically described in the embodiment can be appropriately changed without departing from the gist of the invention. For example, the vehicle according to the present invention includes various types of vehicles such as an automobile, a motorcycle, and a snow tractor like a snow mobile. The number of wheels can be four, three, or two, for example, and the number of wheels is not particularly limited. The vehicle according to the present invention may be a box-shaped vehicle in which the engine is disposed at a position away from the seat, such as in an engine room, or may be a saddle-riding type vehicle in which at least part of the engine is disposed below the seat, and the driver straddles the seat. An example of the saddle-riding type vehicle includes a scooter-type vehicle in which the driver can keep the knees together.

Although a four-stroke air-cooled engine is adopted as the engine in the example described in the embodiment, the engine may be a two-stroke engine or a water-cooled engine.

A non-resonant sensor is adopted as the knock sensor in the example described in the embodiment. However, a resonant knock sensor in which the detection gain of the resonance frequency band is high may be adopted. In this case, the resonance frequency band is set to a band similar to the pass-band of filter processing section 212 of the embodiment, and filter processing section 212 can be omitted. Therefore, the knock sensor has a function of extracting the frequency components of the primary knocking vibration with a larger gain than that of the secondary knocking vibration in this case.

In the embodiment, filter processing section 212 including an analog band-pass filter with a mountain-shape pass curve is illustrated as a configuration (will be called "signal extraction section") that extracts the frequency components of the primary knocking vibration with a larger gain than that of the secondary knocking vibration from the detection signal of knock sensor 10. However, the signal extraction section may be a determination result may be realized by software or may be realized by hardware by using a digital signal processor or sequencer, for example.

In the example described in the embodiment, one ECU 20 includes the configuration of extracting predetermined frequency components with a large gain from the detection signal of knock sensor 10, the configuration of determining that knocking occurs, and the configuration of controlling the combustion based on the determination result, in the control apparatus that controls the combustion of engine 51. However, one or a plurality of the configurations may be separated from each other and connected by signal lines or the like.

In the present invention, the "determination of occurrence of knocking" includes various modes. For example, the determination of the occurrence of knocking includes a mode of determining that knocking occurs based on the detection signal of the knock sensor. The determination of the occurrence of knocking includes a mode of determining that no knocking occurs from the detection signal of the knock sensor. The method for determining that knocking occurs includes a mode of comparing the value obtained by processing the detection signal of the knock sensor with a reference value experimentally defined as a value indicating the occurrence of knocking. A value calculated by an experimentally defined method as a value indicating the occurrence of knocking may be used as the reference value. The method for determining that knocking occurs further includes a mode of determining that knocking occurs if the value obtained by processing the detection signal of the knock sensor is greater than the reference value. The method for determining that knocking occurs also includes a mode of determining that no knocking occurs if the value obtained by processing the detection signal of the knock sensor is smaller than the reference value.

Reference Signs List

1 Vehicle
3 Wheel
10 Knock sensor
20 ECU
21 Knock interface circuit
23 Microcomputer
40 Ignition unit
51 Engine
52 Power transmission section
58 Cylinder
60 Crank angle sensor
212 Filter processing section
231 Knock determination value computation section
232 Knock determination section
234 Ignition timing computation section
237 Window control section
a Bore diameter

**Claims**

1. A power unit comprising:

    an engine (51); and
    a control apparatus adapted to control combustion of the engine (51), wherein:
    the control apparatus includes a knock sensor (10) adapted to detect vibration of the engine (51) and a band-pass filter circuit, wherein:

      the control apparatus is adapted to extract, from a detection signal of the knock sensor (10), components in a primary frequency band with a larger gain than that of components in a secondary frequency band that is a second lowest frequency;
      the control apparatus is adapted to determine that knocking occurs based on a detection signal of the components in the primary frequency band extracted with a larger gain than that of the components in the secondary frequency band; and
      the control apparatus is adapted to control the combustion of the engine (51) based on a determination result of the occurrence of knocking,
      **characterized in that**
      the engine (51) is configured so that a bore diameter of the engine (51) is equal to or greater than 45 mm but not greater than 60 mm;
      the primary frequency band is a lowest frequency band among a plurality of frequency bands in which peaks of knocking vibration are distributed according to the bore diameter equal to or greater than 45 mm but not greater than 60 mm; and
      the band-pass filter circuit has a pass-band peak located between the primary frequency band and the secondary frequency band and closer to the primary frequency band than to the secondary frequency band.

2. A power unit comprising:

    an engine (51); and
    a control apparatus adapted to control combustion of the engine (51), wherein:
    the control apparatus includes a resonant knock sensor (10) adapted to detect vibration of the engine (51), wherein:

      the control apparatus is adapted to extract, from a detection signal of the knock sensor (10), components in a primary frequency band with a larger gain than that of components in a secondary frequency band that is a second lowest frequency;
      the control apparatus is adapted to determine that knocking occurs based on a detection signal of the components in the primary frequency band extracted with a larger gain than that of the components in the secondary frequency band; and
      the control apparatus is adapted to control the combustion of the engine (51) based on a determination result of the occurrence of knocking,
      **characterized in that**
      the engine (51) is configured so that a bore diameter of the engine (51) is equal to or greater than 45 mm but not greater than 60 mm;
      the primary frequency band is a lowest frequency band among a plurality of frequency bands in which peaks of knocking vibration are distributed according to the bore diameter equal to or greater than 45 mm but not greater than 60 mm; and
      the resonant knock sensor has a resonance frequency located between the primary frequency band and the secondary frequency band and closer to the primary frequency band than to the secondary frequency band.

3. A power unit according to claim 1, wherein the engine (51) is configured so that at least part of the primary frequency band of knocking vibration overlaps with a region equal to or greater than 11 kHz but not greater than 15 kHz.

4. A vehicle comprising a power unit according to and one of claims 1 to 3.

5. A method for controlling a power unit comprising an engine (51) and a control apparatus, wherein the control apparatus controls combustion of the engine (51); and wherein the control apparatus includes a knock sensor (10) that detects vibration of the engine (51) and a band-pass filter circuit, the method comprising the steps of:

extracting from a detection signal of the knock sensor (10), components in a primary frequency band with a larger gain than that of components in a secondary frequency band that is a second lowest frequency;

determining that knocking occurs based on a detection signal of the components in the primary frequency band extracted with a larger gain than that of the components in the secondary frequency band; and

controlling the combustion of the engine (51) based on a determination result of the occurrence of knocking, **characterized by**

the engine (51) is configured so that a bore diameter of the engine (51) is equal to or greater than 45 mm but not greater than 60 mm,

the primary frequency band is a lowest frequency band among a plurality of frequency bands in which peaks of knocking vibration are distributed according to the bore diameter equal to or greater than 45 mm but not greater than 60 mm, and

the band-pass filter circuit has a pass-band peak located between the primary frequency band and the secondary frequency band and closer to the primary frequency band than to the secondary frequency band.

**6.** A method for controlling a power unit comprising an engine (51) and a control apparatus, wherein the control apparatus controls combustion of the engine (51); and wherein the control apparatus includes a resonant knock sensor (10) that detects vibration of the engine (51), the method comprising the steps of:

extracting from a detection signal of the knock sensor (10), components in a primary frequency band with a larger gain than that of components in a secondary frequency band that is a second lowest frequency;

determining that knocking occurs based on a detection signal of the components in the primary frequency band extracted with a larger gain than that of the components in the secondary frequency band; and

controlling the combustion of the engine (51) based on a determination result of the occurrence of knocking, **characterized by**

the engine (51) is configured so that a bore diameter of the engine (51) is equal to or greater than 45 mm but not greater than 60 mm,

the primary frequency band is a lowest frequency band among a plurality of frequency bands in which peaks of knocking vibration are distributed according to the bore diameter equal to or greater than 45 mm but not greater than 60 mm, and

the resonant knock sensor has a resonance frequency located between the primary frequency band and the secondary frequency band and closer to the primary frequency band than to the secondary frequency band.

**Patentansprüche**

**1.** Eine Antriebseinheit, umfassend:

einen Motor (51); und

eine Steuervorrichtung, die dazu ausgelegt ist, die Verbrennung des Motors (51) zu steuern, wobei

die Steuervorrichtung einen Klopfsensor (10) zum Erfassen von Schwingungen des Motors (51) und eine Bandpassfilterschaltung umfasst, wobei

die Steuervorrichtung dazu ausgelegt ist, aus einem Erfassungssignal des Klopfsensors (10) Bauteile in einem primären Frequenzband mit einer größeren Verstärkung als die von Bauteilen in einem sekundären Frequenzband, das die zweitniedrigste Frequenz aufweist, zu extrahieren;

die Steuervorrichtung dazu ausgelegt ist, auf der Grundlage eines Erfassungssignals der Bauteile im primären Frequenzband, die mit einer größeren Verstärkung als die Bauteile im sekundären Frequenzband extrahiert wurden, zu bestimmen, dass Klopfen auftritt; und

die Steuervorrichtung dazu ausgelegt ist, die Verbrennung des Motors (51) auf der Grundlage eines Bestimmungsergebnisses des Auftretens von Klopfen zu steuern,

**dadurch gekennzeichnet, dass**

der Motor (51) konfiguriert ist, dass ein Bohrungsdurchmesser des Motors (51) gleich oder größer als 45 mm, aber nicht größer als 60 mm ist;

das primäre Frequenzband ein niedrigstes Frequenzband unter einer Vielzahl von Frequenzbändern ist, in denen Spitzen der Klopfschwingungen entsprechend dem Bohrungsdurchmesser von 45 mm oder mehr, jedoch nicht mehr als 60 mm verteilt sind; und

die Bandpassfilterschaltung eine Durchlassbandspitze aufweist, die zwischen dem primären Frequenzband und dem sekundären Frequenzband liegt und näher am primären Frequenzband als am sekundären Frequenzband ist.

2. Eine Antriebseinheit, umfassend:

einen Motor (51); und
eine Steuervorrichtung, die dazu ausgelegt ist, die Verbrennung des Motors (51) zu steuern, wobei die Steuervorrichtung einen Resonanz-Klopfsensor (10) umfasst, der dazu ausgelegt ist, Vibrationen des Motors (51) zu erfassen, wobei:

die Steuervorrichtung dazu ausgelegt ist, aus einem Erfassungssignal des Klopfsensors (10) Bauteile in einem primären Frequenzband mit einer größeren Verstärkung als die von Bauteilen in einem sekundären Frequenzband, das die zweitniedrigste Frequenz aufweist, zu extrahieren;
die Steuervorrichtung dazu ausgelegt ist, auf der Grundlage eines Erfassungssignals der Bauteile im primären Frequenzband, die mit einer größeren Verstärkung als die Bauteile im sekundären Frequenzband extrahiert wurden, zu bestimmen, dass Klopfen auftritt; und
die Steuervorrichtung dazu ausgelegt ist, die Verbrennung des Motors (51) auf der Grundlage eines Bestimmungsergebnisses des Auftretens von Klopfen zu steuern,
**dadurch gekennzeichnet, dass**
der Motor (51) so konfiguriert ist, dass ein Bohrungsdurchmesser des Motors (51) gleich oder größer als 45 mm, aber nicht größer als 60 mm ist;
das primäre Frequenzband ein niedrigstes Frequenzband unter einer Vielzahl von Frequenzbändern ist, in denen Spitzen der Klopfschwingungen entsprechend dem Bohrungsdurchmesser von 45 mm oder mehr, jedoch nicht mehr als 60 mm verteilt sind; und
der Resonanzklopfsensor eine Resonanzfrequenz aufweist, die zwischen dem primären Frequenzband und dem sekundären Frequenzband liegt und näher am primären Frequenzband als am sekundären Frequenzband ist.

3. Die Antriebseinheit gemäß Anspruch 1, wobei der Motor (51) so konfiguriert ist, dass sich mindestens ein Teil des primären Frequenzbandes der Klopfschwingung mit einem Bereich von mindestens 11 kHz, jedoch nicht mehr als 15 kHz überlappt.

4. Fahrzeug mit einer Antriebseinheit gemäß einem der Ansprüche 1 bis 3.

5. Verfahren zum Steuern einer Antriebseinheit, die einen Motor (51) und eine Steuervorrichtung umfasst, wobei die Steuervorrichtung die Verbrennung des Motors (51) steuert und wobei die Steuervorrichtung einen Klopfsensor (10), der Schwingungen des Motors (51) erfasst, und eine Bandpassfilterschaltung umfasst, wobei das Verfahren die folgenden Schritte umfasst:

Extrahieren von Bauteilen in einem primären Frequenzband mit einer größeren Verstärkung als die von Bauteilen in einem sekundären Frequenzband, das die zweitniedrigste Frequenz aufweist, aus einem Erfassungssignal des Klopfsensors (10);
Feststellen, dass Klopfen auftritt, basierend auf einem Erfassungssignal der Bauteile im primären Frequenzband, die mit einer größeren Verstärkung als die Bauteile im sekundären Frequenzband extrahiert wurden; und
Steuern der Verbrennung des Motors (51) auf der Grundlage eines Bestimmungsergebnisses des Auftretens von Klopfen, **gekennzeichnet dadurch, dass**
der Motor (51) so konfiguriert ist, dass ein Bohrungsdurchmesser des Motors (51) gleich oder größer als 45 mm, aber nicht größer als 60 mm ist,
das primäre Frequenzband ein niedrigstes Frequenzband unter einer Vielzahl von Frequenzbändern ist, in denen Spitzen der Klopfschwingungen entsprechend dem Bohrungsdurchmesser von 45 mm oder mehr, aber nicht mehr als 60 mm verteilt sind, und
die Bandpassfilterschaltung eine Durchlassbandspitze aufweist, die zwischen dem primären Frequenzband und dem sekundären Frequenzband liegt und näher am primären Frequenzband als am sekundären Frequenzband ist.

6. Verfahren zum Steuern einer Antriebseinheit, die einen Motor (51) und eine Steuervorrichtung umfasst, wobei die Steuervorrichtung die Verbrennung des Motors (51) steuert und wobei die Steuervorrichtung einen Resonanz-Klopfsensor (10) umfasst, der Schwingungen des Motors (51) erfasst, wobei das Verfahren die folgenden Schritte umfasst:

Extrahieren von Bauteilen in einem primären Frequenzband mit einer größeren Verstärkung als die von Bauteilen in einem sekundären Frequenzband, das die zweitniedrigste Frequenz aufweist, aus einem Erfassungssignal des Klopfsensors (10);

Feststellen, dass Klopfen auftritt, basierend auf einem Erfassungssignal der Bauteile im primären Frequenzband, das mit einer größeren Verstärkung als die Bauteile im sekundären Frequenzband extrahiert wurde; und

Steuern der Verbrennung des Motors (51) auf der Grundlage eines Bestimmungsergebnisses des Auftretens von Klopfen, **gekennzeichnet dadurch. dass**

der Motor (51) so konfiguriert ist, dass ein Bohrungsdurchmesser des Motors (51) gleich oder größer als 45 mm, aber nicht größer als 60 mm ist,

das primäre Frequenzband ein niedrigstes Frequenzband unter einer Vielzahl von Frequenzbändern ist, in denen Spitzen der Klopfschwingungen entsprechend dem Bohrungsdurchmesser von 45 mm oder mehr, jedoch nicht mehr als 60 mm verteilt sind, und

der Resonanzklopfsensor eine Resonanzfrequenz aufweist, die zwischen dem primären Frequenzband und dem sekundären Frequenzband liegt und näher am primären Frequenzband als am sekundären Frequenzband ist.

## Revendications

1. Groupe motopropulseur comprenant :

   un moteur (51) ; et
   un appareil de commande adapté pour commander la combustion du moteur (51), dans lequel :
   l'appareil de commande inclut un capteur de cognement (10) adapté pour détecter les vibrations du moteur (51) et un circuit de filtre passe-bande, dans lequel :

   l'appareil de commande est adapté pour extraire, à partir d'un signal de détection du capteur de cognement (10), des composants dans une bande de fréquence primaire avec un gain plus important que celui des composants dans une bande de fréquence secondaire qui est une deuxième fréquence la plus basse ;
   l'appareil de commande est adapté pour déterminer qu'un cognement se produit sur la base d'un signal de détection des composants de la bande de fréquence primaire extraits avec un gain plus important que celui des composants de la bande de fréquence secondaire ; et
   l'appareil de commande est adapté pour commander la combustion du moteur (51) sur la base d'un résultat de détermination de l'apparition du cognement,
   **caractérisé en ce que**
   le moteur (51) est configuré de manière à ce que le diamètre d'alésage du moteur (51) soit égal ou supérieur à 45 mm mais pas supérieur à 60 mm ;
   la bande de fréquence primaire est une bande de fréquence la plus basse parmi une pluralité de bandes de fréquence dans lesquelles les pics de vibration de cognement sont répartis selon le diamètre d'alésage égal ou supérieur à 45 mm mais inférieur ou égal à 60 mm ; et
   le circuit de filtre passe-bande a un pic de bande passante situé entre la bande de fréquence primaire et la bande de fréquence secondaire et plus proche de la bande de fréquence primaire que de la bande de fréquence secondaire.

2. Groupe motopropulseur comprenant :

   un moteur (51) ; et
   un appareil de commande adapté pour commander la combustion du moteur (51), dans lequel :
   l'appareil de commande inclut un capteur de cognement (10) résonnant adapté pour détecter les vibrations du moteur (51), dans lequel :

   l'appareil de commande est adapté pour extraire, à partir d'un signal de détection du capteur de cognement (10), des composants dans une bande de fréquence primaire avec un gain plus important que celui des composants dans une bande de fréquence secondaire qui est une deuxième fréquence la plus basse ;
   l'appareil de commande est adapté pour déterminer qu'un cognement se produit sur la base d'un signal de détection des composants de la bande de fréquence primaire extraits avec un gain plus important que celui des composants de la bande de fréquence secondaire ; et
   l'appareil de commande est adapté pour commander la combustion du moteur (51) sur la base d'un résultat de détermination de l'apparition du cognement,

**caractérisé en ce que**

le moteur (51) est configuré de manière à ce que le diamètre d'alésage du moteur (51) soit égal ou supérieur à 45 mm mais pas supérieur à 60 mm ;

la bande de fréquence primaire est une bande de fréquence la plus basse parmi une pluralité de bandes de fréquence dans lesquelles les pics de vibration de cognement sont répartis selon le diamètre d'alésage égal ou supérieur à 45 mm mais inférieur ou égal à 60 mm ; et

le capteur de cognement résonnant a une fréquence de résonance située entre la bande de fréquence primaire et la bande de fréquence secondaire et plus proche de la bande de fréquence primaire que de la bande de fréquence secondaire.

3. Groupe motopropulseur selon la revendication 1, dans lequel le moteur (51) est configuré pour qu'au moins une partie de la bande de fréquence primaire de vibration de cognement chevauche une région supérieure ou égale à 11 kHz mais inférieure ou égale à 15 kHz.

4. Véhicule comprenant un groupe motopropulseur selon l'une des revendications 1 à 3.

5. Procédé de commande d'un groupe motopropulseur comprenant un moteur (51) et d'un appareil de commande, dans lequel l'appareil de commande commande la combustion du moteur (51) ; et dans lequel l'appareil de commande inclut un capteur de cognement (10) qui détecte les vibrations du moteur (51) et un circuit de filtre passe-bande, le procédé comprenant les étapes suivantes :

extraire d'un signal de détection du capteur de cognement (10), les composants d'une bande de fréquence primaire ayant un gain plus important que celui des composants d'une bande de fréquence secondaire qui est une deuxième fréquence la plus basse ;

déterminer que le cognement se produit sur la base d'un signal de détection des composants de la bande de fréquence primaire extraits avec un gain plus important que celui des composants de la bande de fréquence secondaire ; et

commander la combustion du moteur (51) sur la base d'un résultat de détermination de l'apparition du cognement, **caractérisé en ce que**

le moteur (51) est configuré de manière à ce que le diamètre d'alésage du moteur (51) soit égal ou supérieur à 45 mm mais pas supérieur à 60 mm,

la bande de fréquence primaire est une bande de fréquence la plus basse parmi une pluralité de bandes de fréquence dans lesquelles les pics de vibration de cognement sont répartis selon le diamètre d'alésage égal ou supérieur à 45 mm mais inférieur ou égal à 60 mm, et

le circuit de filtre passe-bande a un pic de bande passante situé entre la bande de fréquence primaire et la bande de fréquence secondaire et plus proche de la bande de fréquence primaire que de la bande de fréquence secondaire.

6. Procédé de commande d'un groupe motopropulseur comprenant un moteur (51) et d'un appareil de commande, dans lequel l'appareil de commande commande la combustion du moteur (51) ; et dans lequel l'appareil de commande inclut un capteur de cognement (10) résonnant qui détecte les vibrations du moteur (51), le procédé comprenant les étapes suivantes :

extraire d'un signal de détection du capteur de cognement (10), les composants d'une bande de fréquence primaire ayant un gain plus important que celui des composants d'une bande de fréquence secondaire qui est une deuxième fréquence la plus basse ;

déterminer que le cognement se produit sur la base d'un signal de détection des composants de la bande de fréquence primaire extraits avec un gain plus important que celui des composants de la bande de fréquence secondaire ; et

commander la combustion du moteur (51) sur la base d'un résultat de détermination de l'apparition du cognement, **caractérisé en ce que**

le moteur (51) est configuré de manière à ce que le diamètre d'alésage du moteur (51) soit égal ou supérieur à 45 mm mais pas supérieur à 60 mm,

la bande de fréquence primaire est une bande de fréquence la plus basse parmi une pluralité de bandes de fréquence dans lesquelles les pics de vibration de cognement sont répartis selon le diamètre d'alésage égal ou supérieur à 45 mm mais inférieur ou égal à 60 mm, et

le capteur de cognement résonnant a une fréquence de résonance située entre la bande de fréquence primaire et la bande de fréquence secondaire et plus proche de la bande de fréquence primaire que de la bande de fréquence

secondaire.

FIG. 1

FIG. 2

FIG. 3

FIG. 4

FIG. 5

FIG. 6A

| Q=10 | GAIN (dB) | | | GAIN DIFFERENCE (TIMES) |
|---|---|---|---|---|
| | 11kHz | 5kHz | GAIN DIFFERENCE | |
| | 5.75 | -19.06 | -24.81 | 0.06 |

FIG. 6B

| Q=10 | GAIN (dB) | | | GAIN DIFFERENCE (TIMES) |
|---|---|---|---|---|
| | 11kHz | 6kHz | GAIN DIFFERENCE | |
| | 5.75 | -16.46 | -22.20 | 0.08 |

FIG. 6C

| Q=10 | GAIN (dB) | | | GAIN DIFFERENCE (TIMES) |
|---|---|---|---|---|
| | 11kHz | 7kHz | GAIN DIFFERENCE | |
| | 5.75 | -13.74 | -19.49 | 0.10 |

*FIG. 7*

EP 2 873 841 B1

| | GAIN(dB) | | | GAIN DIFFERENCE (TIMES) |
|---|---|---|---|---|
| | 20kHz | 15kHz | GAIN DIFFERENCE | |
| Q=10 | −8.69 | 6.30 | −14.99 | 0.17 |

*FIG. 8*

EP 2 873 841 B1

FIG. 9A

FIG. 9B

FIG. 10

FIG. 11

START

DOES CYCLE
COUNTER INDICATE
RESET CYCLE? — S61

NO

YES

STORE DETERMINATION
RESULT INDICATING
"IT IS RESET TIMING" — S62

STORE DETERMINATION
RESULT INDICATING
"IT IS NOT RESET TIMING" — S63

CLEAR CYCLE COUNTER — S64

INCREMENT CYCLE COUNTER — S65

CALCULATE IGNITION TIMING
CORRECTION VALUE ACCORDING TO
COMPUTATION CONDITION TABLE — S66

END

FIG. 12

<u>70</u>

| | IT IS RESET TIMING | IT IS NOT RESET TIMING |
|---|---|---|
| KNOCKING OCCURS | (1) IGNITION TIMING CORRECTION VALUE = LAST CYCLE CORRECTION VALUE − KNOCK DETERMINATION RETARD AMOUNT + RESET ADVANCE AMOUNT | (3) IGNITION TIMING CORRECTION VALUE = LAST CYCLE CORRECTION VALUE − KNOCK DETERMINATION RETARD AMOUNT |
| NO KNOCKING OCCURS | (2) IGNITION TIMING CORRECTION VALUE = LAST CYCLE CORRECTION VALUE + RESET ADVANCE AMOUNT | (4) IGNITION TIMING CORRECTION VALUE = LAST CYCLE CORRECTION VALUE |

*FIG. 13*

EP 2 873 841 B1

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0361057 A1
- JP HEI01159467 A
- JP 2004257332 A
- JP 2012220336 A